# FASCICULE DE BREVET EUROPEEN

(11) **EP 3 539 807 B1**
(45) Date de publication et mention de la délivrance du brevet: **23.12.2020**
(21) Numéro de dépôt: 19160545.0
(22) Date de dépôt: 04.03.2019
(51) Int. Cl.: B60J 5/10

(54) **MONTANTS DE HAYON OPTIMISÉS**
OPTIMIERTE HECKKLAPPENPFOSTEN
OPTIMISED TAILGATE MOUNTS

(30) Priorité: 12.03.2018 FR 1852096
(43) Date de publication de la demande: 18.09.2019
(73) Titulaire: Compagnie Plastic Omnium, 69007 Lyon (FR)
(72) Inventeur: LETERRIER, Franck, 01150 LAGNIEU (FR); PORCHEROT, Didier, 69003 LYON (FR)
(74) Mandataire: LLR

(56) Documents cités:
- EP-A1- 1 918 144
- FR-A1- 2 927 876
- JP-U- H0 529 816

## Description

L'invention concerne le domaine des véhicules automobiles et plus particulièrement les véhicules comportant un hayon arrière en plastique.

Le hayon fermant l'ouverture arrière du véhicule comprend une partie supérieure reliée par des charnières à un segment du toit du véhicule, une partie inférieure contenant des éléments techniques tels que la commande d'ouverture ou le dispositif d'éclairage de la plaque d'immatriculation et comporte une ouverture pour accueillir une vitre arrière. La partie supérieure et la partie inférieure sont reliées par deux montants. La vitre arrière est collée sur toute sa périphérie sur une piste de collage disposée sur les montants et sur les parties inférieures et supérieures.

Le hayon peut être réalisé préférentiellement par moulage d'un matériau thermodurcissable ou thermoplastique.

Le profil des montants doit satisfaire une multitude de contraintes spécifiques et parfois contradictoires

En effet, outre la rigidité structurelle requise pour résister sans se déformer aux contraintes liées aux opérations d'ouverture et de fermeture, la largeur des montants conditionne le champ de vision arrière ainsi que la largeur de l'ouverture arrière donnant accès au volume de rangement. De plus, les montants doivent accueillir du côté de la caisse des portées destinées à être mises en contact avec un joint d'étanchéité monté sur la partie fixe du véhicule, ainsi que du côté extérieur une piste de collage destinée à recevoir la vitre arrière. Les montants sont également susceptibles d'abriter des équipements techniques tel qu'un faisceau électrique ou encore des actuateurs destinés à faciliter les opérations d'ouverture et de fermeture du hayon. La présence de ces équipements techniques est accompagnée de contraintes d'accessibilité pour en faciliter le montage initial puis l'entretien. Enfin, les montants peuvent être amenés à jouer un rôle dans l'aérodynamisme du véhicule et participent, selon leur visibilité, à l'aspect général du véhicule. A cet effet, un dépôt sérigraphique, de couleur généralement sombre, dont la largeur est préjudiciable à l'esthétique du véhicule et à la rétrovision est déposé sur la périphérie de la vitre arrière pour masquer la partie technique du montant qui serait visible de l'extérieur au travers de la vitre.

A toutes ces contraintes, s'ajoutent les contraintes spécifiques au procédé de moulage employé pour réaliser le hayon en matériau thermoplastique ou thermodurcissable de façon industrielle. Les montants présentent donc usuellement des formes ouvertes sans contredépouilles et faciles à démouler.

Aussi, de nombreuses publications décrivant la section transversale des montants éclairent les voies empruntées par les concepteurs de véhicule pour satisfaire tout ou partie des exigences évoquées ci-dessus.

La publication FR 3 037 286 décrit un montant de hayon dont la section transversale a une forme en H permettant de loger l'actuateur. La largeur totale du montant est sensiblement égale à la somme des encombrements transversaux de la piste de collage, de la portée du joint d'étanchéité et de l'actuateur. Cette disposition a pour effet de réduire la largeur du champ de rétrovision.

La publication FR 3 041 571 décrit un montant en forme de U comprenant sur la paroi interne du U une garniture incurvée, à l'opposé du plan médian Y0, vers les côtés latéraux du véhicule pour fermer l'ouverture du profilé et pour élargir le champ de rétrovision.

La publication EP 3 241 700 décrit un montant de hayon dont la section transversale est également en forme de U orienté vers l'arrière du véhicule. La base du U forme la portée du joint d'étanchéité et comporte une excroissance orientée vers l'avantdu véhicule pour cacher la vue du joint d'étanchéité depuis l'intérieur de l'habitacle. La paroi latérale externe du U se prolonge vers le côté du véhicule, à l'opposé du plan médian Y0, pour former une piste de collage de la vitre arrière et se poursuit en adoptant une forme aérodynamique s'étendant en excroissance vers l'arrière du véhicule. Cet arrangement ne permet pas d'augmenter le champ de rétrovision, et ne prévoit pas de loger des équipements techniques.

La publication JP2001-328429 propose un hayon en thermoplastique injecté comprenant des montants dont la section transversale est en forme de U ouvert vers l'arrière du véhicule et comprenant une cloison intérieure pour augmenter la rigidité du montant.

La publication FR 2 927 876 A1 décrit un autre hayon avec un montant constituant un profilé à section transversale ouverte.

L'invention a pour objet de proposer un hayon réalisé de préférence par moulage d'une matière thermoplastique ou thermodurcissable et permettant de répondre à l'ensemble des exigences évoquées dans les paragraphes qui précèdent.

Le hayon selon l'invention comprend au moins un montant latéral sur lequel est rapportée une vitre arrière, ledit montant constituant un profilé à section transversale ouverte comprenant une première et une seconde concavité en forme de U comportant chacune deux parois latérales.

Les montants du hayon se caractérisent en ce que, lorsque le hayon est en position fermée, la première concavité est orientée vers le plan médian Y0 du véhicule de sorte que le U comporte une paroi arrière disposée vers l'arrière du véhicule et une paroi avant disposée vers l'avant du véhicule, et que la seconde concavité est orientée vers la partie arrière du véhicule de sorte que le U comporte une paroi interne disposée du côté du plan médian et une paroi externe disposée à l'opposé du plan médian vers le côté latéral du véhicule, et en ce que la paroi avant de la première concavité est disposée en continuité de la paroi externe de la seconde concavité et que la paroi arrière de la première concavité est disjointe de la paroi interne de la seconde concavité de manière à libérer un espace libre permettant d'accéder vers la partie interne du profilé formé par l'espace intérieur de ces deux U.

Cette forme particulière de la section du montant permet de satisfaire les exigences en termes de rigidité mécanique et de réduction de l'encombrement transversal dudit montant en ce qu'elle permet d'aligner dans la direction longitudinale la portée d'étanchéité et la piste de collage. Il en résulte une diminution de la largeur du montant et une réduction de la largeur de la sérigraphie déposée sur le contour de la vitre arrière. De plus, cet agencement de deux volumes en U contigus crée un espace intérieur permettant de disposer l'actuateur et les faisceaux de câbles dans des logements séparés pour préserver ces équipements de toute interaction physique susceptible de provoquer un dysfonctionnement.

Le hayon selon l'invention peut comprendre isolément, ou en combinaison, les caractéristiques suivantes :
- La face avant de la paroi avant de la première concavité constitue une portée destinée à être mise en appui avec un joint d'étanchéité disposé sur la carrosserie du véhicule.
- La vitre arrière est collée sur la face externe de la paroi arrière de la première concavité.
- Un faisceau de câbles circule dans l'espace intérieur défini par la première concavité.
- Un actuateur, articulé entre le segment de toit et le hayon, est disposé dans l'espace intérieur de la seconde concavité pour faciliter l'ouverture ou la fermeture du hayon.
- La paroi interne de la deuxième concavité a une longueur inférieure à la paroi externe de ladite deuxième concavité de manière à augmenter le champ de vision arrière.
- La paroi interne de la deuxième concavité a une longueur supérieure à la paroi externe de ladite deuxième concavité, et le prolongement de la paroi interne de la seconde concavité s'incurve à l'opposé du plan médian vers le côté latéral du véhicule en formant un angle non nul avec la direction longitudinale XX' de manière à augmenter la vision arrière.
- Une pièce de renfort est disposée sur la paroi intérieure ou extérieure de la deuxième concavité
- La pièce de renfort se prolonge depuis la paroi externe de la deuxième concavité jusqu'à l'extrémité de la paroi arrière de la première concavité.
- La paroi arrière de la première concavité forme un angle non nul avec la direction transversale YY'.
- Un élément de garniture amovible est disposé entre l'extrémité de la paroi arrière de la première concavité et l'extrémité de la paroi interne de la seconde concavité pour obturer le passage libre du profilé formant le montant.
- Les profilés des montants sont venus de matière avec la partie supérieure et la partie inférieure du hayon, le hayon étant réalisé par moulage d'un matériau thermodurcissable ou thermoplastique.

L'invention sera mieux comprise à la lecture des figures annexées, qui sont fournies à titre d'exemples et ne présentent aucun caractère limitatif, dans lesquelles :
- La figure 1 est une vue schématique de l'arrière d'un véhicule équipé d'un hayon comprenant des actuateurs.
- La figure 2 est une vue schématique de côté permettant de visualiser le hayon en position ouverte et en position fermée.
- La figure 3 est une vue schématique en coupe transversale selon A-A d'un montant du hayon selon l'invention.
- La figure 4 est une vue schématique en coupe transversale d'un montant de hayon selon une première alternative de réalisation de l'invention.
- La figure 5 est une vue schématique en coupe transversale d'un montant de hayon selon une seconde alternative de réalisation de l'invention.
- La figure 6 est une vue schématique en coupe transversale d'un montant de hayon selon une troisième alternative de réalisation de l'invention.

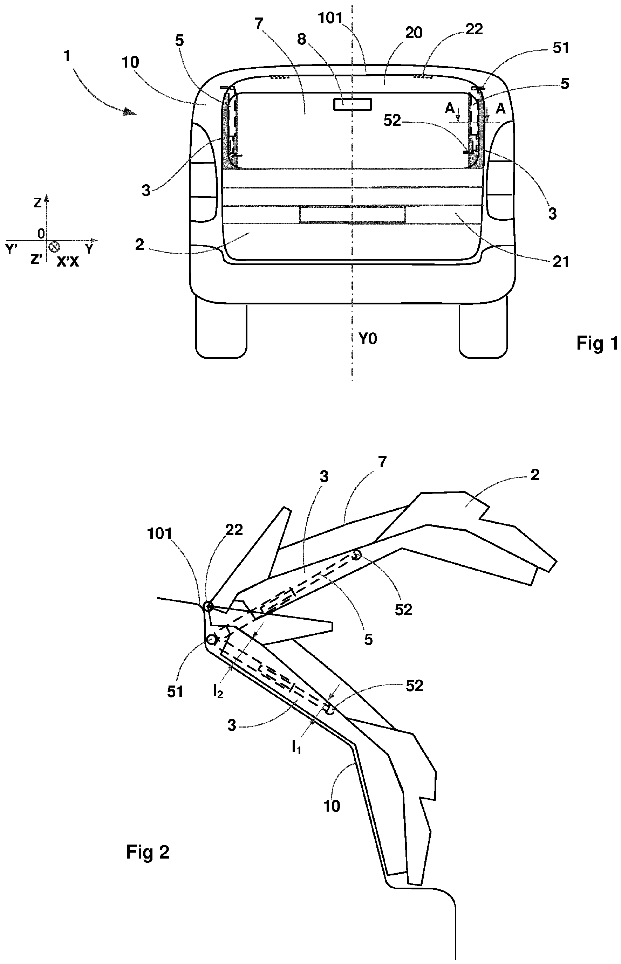

La partie arrière du véhicule 1 représenté à la figure 1 permet de visualiser le hayon 2 arrière fermant l'ouverture arrière.

Dans ce qui suit, on considérera le repère orthonormé OXYZ dans lequel l'axe X'OX représente l'axe longitudinal orienté de l'arrière vers l'avant, l'axe Y'OY représente l'axe transversal orienté de la gauche vers la droite, l'axe Z'OZ représente l'axe vertical orienté du bas vers le haut. Le plan Y0, perpendiculaire à l'axe Y'OY correspond au plan médian du véhicule.

Le hayon 2 comprend une partie supérieure 20 et une partie inférieure 21 reliées entre elles par deux montants latéraux 3.

La partie supérieure 20 est reliée par des charnières 22 au segment de toit 101 formant partie de la carrosserie 10 du véhicule 1. Une vitre arrière 7 est collée par sa périphérie sur les montants 3 et sur les parties supérieure et inférieure du hayon.

Des actuateurs 5 ayant pour objet de faciliter les opérations d'ouverture et de fermeture du hayon, sont disposés latéralement du côté de chacun des montants 3 et sont reliés par chacune de leurs extrémités à des points d'attache pivotant 51 et 52 disposés respectivement sur la carrosserie 10 et sur les montants 3 du hayons2. A titre d'exemple, l'actuateur 5 peut être un vérin du type vérin à gaz, ou encore un vérin à vis entrainée en rotation par un moteur électrique.

La figure 2 permet de visualiser le hayon en position ouverte et en position fermée. Pour des raisons de style, on observera ici que, en position fermée, les montants et la vitre intérieure forment un angle donné avec la position verticale. La section transversale des montants selon A-A est formée par l'intersection desdits montants par un plan perpendiculaire à la direction de cet angle et correspond à la section droite dudit montant.

On considèrera également que les positions relatives « avant » et « arrière » par rapport au véhicule s'appliquent au hayon lorsque celui-ci est en position fermée, les positions « avant » et « arrière » restant indépendantes de l'angle d'inclinaison du montant par rapport à la verticale.

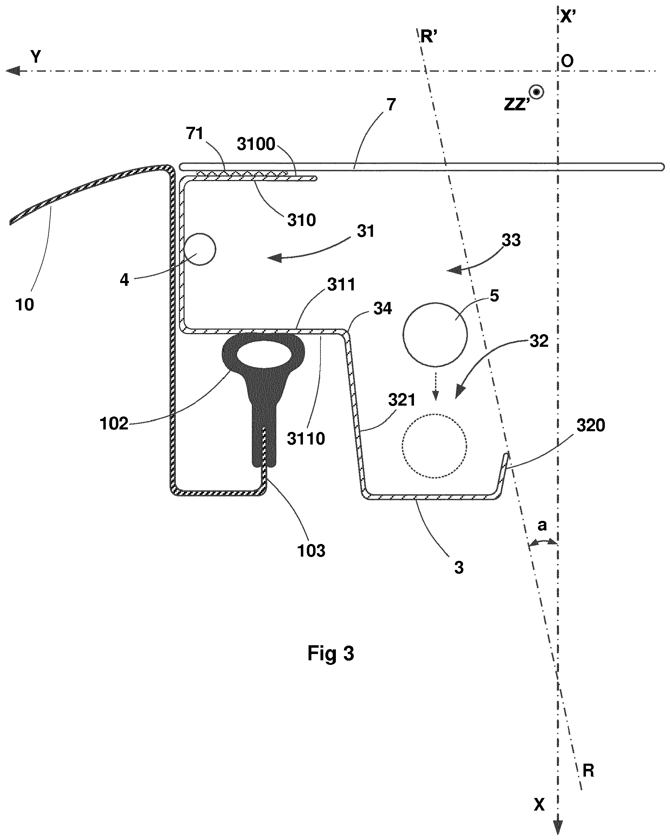

La figure 3 représente une section transversale du montant 3 latéral droit symétrique du montant latéral gauche.

Une première concavité 31 en forme de U s'ouvre en direction du plan médian Y0. Cette première concavité 31 comprend une paroi arrière 310 et une paroi avant 311 orientées chacune sensiblement selon l'axe YY'.

La deuxième concavité 32 en forme de U s'ouvre en direction de l'arrière du véhicule et comprend une paroi interne 320 et une paroi externe 321 orientées chacune sensiblement selon l'axe XX'.

La paroi avant 311 de la première concavité est reliée à la paroi externe 321 de la deuxième concavité de sorte que ces deux parois se rejoignent en formant entre elles au point de convergence 34 un angle donné proche d'un angle droit.

La paroi arrière 310 de la première concavité 31 et la paroi interne 320 de la deuxième concavité 32 sont disjointes de manière à laisser un espace libre 33 permettant d'accéder à l'intérieur du montant pour améliorer l'accessibilité de cet espace lors des opérations de montage et d'assemblage ou des opérations de maintenance et de réparation des organes techniques contenus dans ledit montant.

La face arrière 3100 de la paroi arrière 310 de la première concavité 31 forme une piste de collage sur laquelle est collée la vitre arrière 7 à l'aide d'un ruban de colle 71.

La face avant 3110 de la paroi avant 311 de la première concavité 31 forme une portée sur laquelle vient s'appuyer un joint d'étanchéité 102 monté sur une feuillure 103 de la carrosserie 10.

La paroi avant doit offrir un appui assez large pour recevoir le joint écrasé Une largeur de 25 à 50 mm, et de préférence allant de 30mm à 40mm semble convenir.

La paroi arrière doit offrir une largeur suffisante à la piste de collage. Cette largeur varie de 15mm à 50mm, et de préférence de 20mm à 30mm.

La portée d'étanchéité 3110 et la piste de collage 3100 sont donc alignées l'une derrière l'autre selon la direction XX' ce qui permet de réduire l'encombrement de ces deux surfaces fonctionnelles dans la direction YY' dans le but d'augmenter le champ de vision arrière. De plus, la portée d'étanchéité étant disposée au plus près de l'extrémité latérale de la vitre arrière, il est possible d'augmenter la largeur de l'ouverture arrière.

Un faisceau de câbles 4 destiné à l'alimentation des équipements disposés dans le hayon est logé dans la première concavité 31.

L'actuateur 5, destiné à faciliter les mouvements d'ouverture et de fermeture du hayon, est disposé dans la deuxième concavité 32. Le cercle en pointillé permet de visualiser la position de l'actuateur lorsque le hayon est en position ouverte.

Comme on peut l'observer sur la figure 2, il est nécessaire de prévoir un espace libre dans la direction XX' pour autoriser le débattement de l'actuateur 5 entre la position ouverte et la position fermée. La longueur des parois latérales interne 320 et externe 321 de la deuxième concavité 32 augmente alors selon une direction allant d'une extrémité inférieure du hayon (I₁) jusqu'au segment de toit (I₂), de manière à autoriser le débattement de l'actuateur à l'intérieur de la deuxième concavité lors des mouvements du hayon autour de la charnière (I₁>I₂).

La première concavité 31 étant distincte de la deuxième concavité 32 il est ainsi possible d'éviter tout contact entre le faisceau de câbles 4 et l'actuateur 5.

On observera également que la deuxième concavité se projette vers l'avant et permet donc de masquer la vue du joint d'étanchéité 102 depuis l'intérieur de l'habitacle.

Les parois de chacune des concavités n'ont pas nécessairement des longueurs égales.

Ainsi, dans le montant 3 illustré à la figure 3, la paroi interne 320 de la deuxième concavité 32 est plus courte que la paroi externe 321. Cette disposition permet d'augmenter le champ de rétrovision en augmentant l'angle a formé par une droite RR' passant par le rétroviseur et par l'extrémité arrière de la paroi interne 320 de la deuxième concavité 32.

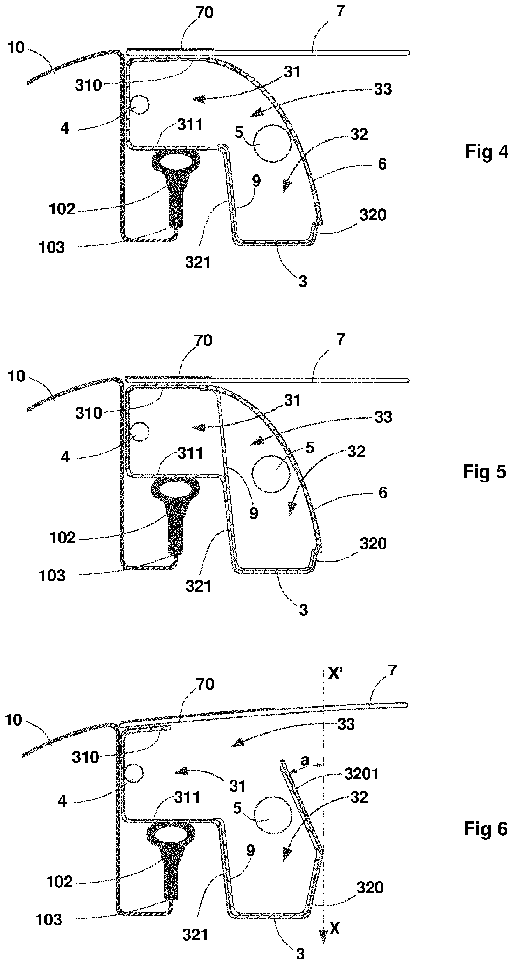

La figure 4 illustre le cas, selon une première alternative de réalisation, dans lequel il s'avère nécessaire pour des raisons de résistance mécanique de renforcer la rigidité du montant 3. A cet effet une pièce de renfort 9 peut être rapportée par collage ou par soudure dans la partie externe ou préférentiellement interne de la deuxième concavité 32.

La figure 5 illustre le cas, selon une deuxième alternative de réalisation, dans lequel, toujours pour des raisons de résistance mécanique, il est nécessaire de prolonger la partie de la pièce de renfort 9 disposée sur paroi externe 321 de la deuxième concavité 32 jusqu'à l'extrémité de la paroi arrière 310 de la première concavité 31. Ce faisant, on dégrade partiellement l'accessibilité à la partie interne de la première concavité 31 contenant le faisceau de câbles, mais on améliore le cloisonnement entre les deux cavités en on annule tout risque de contact entre l'actuateur et le faisceau de câbles.

A titre d'option, il est également possible, dans toutes les configurations précédentes, de fermer le passage libre 33 à l'aide d'un élément de garniture 6 amovible servant de décor et disposé entre l'extrémité de la paroi arrière 310 de la première concavité 31 et l'extrémité de la paroi interne 320 de la seconde concavité 32. Cet élément de garniture 6 peut utilement être incliné dans la direction opposée au plan médian Y0 de manière à augmenter le champ de rétrovision et à réduire la largeur du dépôt sérigraphique 70 réalisé sur la périphérie de la vitre arrière 7 pour cacher la partie du montant 3 visible depuis l'extérieur.

Une troisième alternative de réalisation est illustrée à la figure 6 dans laquelle, pour renforcer la structure du hayon, la paroi interne 320 de la deuxième concavité comporte un prolongement 3201 s'étendant vers l'arrière en faisant un angle a avec la direction longitudinale XX', de manière à augmenter le champ de vision arrière.

Lorsque la vitre arrière 7 présente une concavité orientée dans la direction XX' il est possible d'ouvrir légèrement la piste de collage vers l'arrière en disposant la paroi arrière 310 de la première concavité 31 de sorte qu'elle fasse un angle non nul avec la direction YY' comme cela est visible à la figure 6.

Le hayon arrière 2 tel que décrit ci-dessus dans chacune des alternatives de réalisation est réalisé préférentiellement par moulage d'un matériau thermoplastique ou thermodurcissable. Dans ces conditions, les montants 3 sont venus de matière avec la partie supérieure 20 et la partie inférieure 21 du hayon.

On observera que les montants comportent des contredépouilles dans la direction XX' qui représente la direction principale d'extraction de la pièce. Aussi, il sera nécessaire de prévoir un moule comportant des tiroirs à mouvement latéral pour mouler les parois de la première concavité ou, dans le cas de l'alternative de réalisation illustrée à la figure 6 pour mouler l'extension 3201 de la branche interne 320 de la deuxième concavité 32.

### NOMENCLATURE

- 1: Véhicule.
- 10: Carrosserie/Châssis
- 101: Segment de toit.
- 102: Joint d'étanchéité
- 103: Feuillure supportant le joint d'étanchéité.
- 2: Hayon.
- 20: Partie supérieure du hayon.
- 21: Partie inférieure du hayon.
- 22: Charnière.
- 3: Montant.
- 31: Première concavité.
- 310: Paroi arrière de la première concavité.
- 3100: Face arrière de la paroi arrière de la première concavité.
- 311: Paroi avant de la première concavité.
- 3110: Face avant de la banche avant de la première concavité.
- 32: Deuxième concavité.
- 320: Paroi interne de la deuxième concavité.
- 3201: Extension de la paroi interne de la deuxième concavité.
- 321: Paroi externe de la deuxième concavité.
- 33: Espace libre.
- 34: Point de convergence.
- 4: Faisceau de câbles.
- 5: Actuateur.
- 51: Point d'attache de l'actuateur disposé sur la carrosserie/châssis du véhicule.
- 52: Point d'attache de l'actuateur disposé sur le hayon.
- 6: Elément de garniture.
- 7: Vitre arrière.
- 70: Dépôt sérigraphique.
- 71: Ruban de colle.
- 8: Rétroviseur.
- 9: Pièce de renfort.
- XX': Axe longitudinal du véhicule (arrière/avant).
- YY': Axe transversal du véhicule (droite/gauche).
- ZZ': Axe Vertical du véhicule.
- Y0: Plan longitudinal médian perpendiculaire à l'axe YY'.
- l₁, l₂: Epaisseur du montant dans la direction longitudinale.
- a: Angle de rétrovision.

## Revendications

1. Hayon (2) de véhicule (1) destiné à être monté mobile en rotation par l'intermédiaire d'une ou plusieurs charnières (22) sur un segment de toit (101) formant partie de la carrosserie (10) dudit véhicule (1), ledit hayon (2) comprenant au moins un montant latéral (3) sur lequel est rapportée une vitre arrière (7), le montant (3) constituant un profilé à section transversale ouverte comprenant une première (31) et une seconde concavité (32) en forme de U comportant chacune deux parois latérales, **caractérisé en ce que,** la première concavité (31) est orientée vers le plan médian (Y0) du véhicule de sorte que le U comporte une paroi arrière (310) disposée vers l'arrière du véhicule et une paroi avant (311) disposée vers l'avant du véhicule, et que la seconde concavité (32) est orientée vers l'arrière du véhicule de sorte que le U comporte une paroi interne (320) disposée du côté du plan médian (Y0) et une paroi externe (321) disposée à l'opposé du plan médian (Y0) vers le côté latéral du véhicule, et **en ce que** la paroi avant (311) de la première concavité (31) est disposée en continuité de la paroi externe (321) de la seconde concavité (32) et que la paroi arrière (310) de la première concavité (31) est disjointe de la paroi interne (320) de la seconde concavité (32) de manière à libérer un espace libre (33) permettant d'accéder vers la partie interne du profilé formé par l'espace intérieur de ces deux U.

2. Hayon (2) de véhicule (1) selon la revendication 1, dans lequel la face avant (3110) de la paroi avant (311) de la première concavité (31) constitue une portée destinée à être mise en appui avec un joint d'étanchéité (102) disposé sur la carrosserie (10) du véhicule (1).

3. Hayon (2) de véhicule (1) selon la revendication 1 ou la revendication 2, dans lequel la vitre arrière (7) est collée sur la face externe (3100) de la paroi arrière (310 de la première concavité (31).

4. Hayon (2) de véhicule (1) selon l'une quelconque des revendications précédentes, dans lequel un faisceau de câbles (4) circule dans l'espace intérieur défini par la première concavité (31).

5. Hayon (2) de véhicule (1) selon l'une quelconque des revendications précédentes, dans lequel un actuateur (5), articulé entre le segment de toit (101) et le hayon (2), est disposé dans l'espace intérieur de la seconde concavité (32) pour faciliter l'ouverture ou la fermeture du hayon.

6. Hayon (2) de véhicule (1) selon l'une quelconque des revendications précédentes, dans lequel la paroi interne (320) de la deuxième concavité (32) a une longueur inférieure à la paroi externe (321) de ladite deuxième concavité (32) de manière à augmenter le champ de vision arrière.

7. Hayon (2) de véhicule (1) selon l'une quelconque des revendications précédentes, dans lequel la paroi interne (320) de la deuxième concavité (32) a une longueur supérieure à la paroi externe (321) de ladite deuxième concavité (32), et dans lequel le prolongement (3201) de la paroi interne (320) de la seconde concavité (32) s'incurve à l'opposé du plan médian (Y0) vers le côté latéral du véhicule, en formant un angle (a) non nul avec la direction longitudinale XX' de manière à augmenter la vision arrière.

8. Hayon (2) de véhicule (1) selon l'une quelconque des revendications précédentes, dans lequel une pièce de renfort (9) est disposée sur la paroi intérieure ou extérieure de la deuxième concavité (32)

9. Hayon (2) de véhicule (1) selon la revendication 8, dans lequel la pièce de renfort (9) se prolonge depuis la paroi externe (321) de la deuxième concavité (32) jusqu'à l'extrémité de la paroi arrière (310) de la première concavité (31).

10. Hayon (2) de véhicule (1) selon l'une quelconque des revendications précédentes, dans lequel la paroi arrière (310) de la première concavité (31) forme un angle non nul avec la direction transversale YY'.

11. Hayon (2) de véhicule (1) selon l'une quelconque des revendications précédentes, dans lequel un élément de garniture amovible (6) est disposé entre l'extrémité de la paroi arrière (310) de la première concavité (31) et l'extrémité de la paroi interne (320) de la seconde concavité (32) pour obturer le passage libre (33) du profilé formant le montant.

12. Hayon (2) de véhicule (1) selon l'une quelconque des revendications précédentes, dans lequel les profilés des montants (3) sont venus de matière avec la partie supérieure (20) et la partie inférieure (21) du hayon (2), le hayon étant réalisé par moulage d'un matériau thermodurcissable ou thermoplastique.

## Patentansprüche

1. Heckklappe (2) eines Fahrzeugs (1), die dazu bestimmt ist, mittels eines oder mehrerer Scharniere (22) drehbar an einem Dachsegment (101) angebracht zu werden, das einen Teil der Karosserie (10) des Fahrzeugs (1) bildet, wobei die Heckklappe (2) mindestens eine seitlichen Pfosten (3) aufweist, an der eine Heckscheibe (7) befestigt ist, wobei der Pfosten (3) eine Profil mit offenem Querschnitt bildet, die eine erste (31) und eine zweite U-förmige Konkavität (32) mit jeweils zwei Seitenwänden aufweist, **dadurch gekennzeichnet, dass** die erste Konkavität (31) zur Mittelebene (YO) des Fahrzeugs ausgerichtet ist, so dass das U eine zum Heck des Fahrzeugs hin angeordnete Rückwand (310) und eine zum Vorderteil des Fahrzeugs hin angeordnete Vorderwand (311) aufweist, und dass die zweite Konkavität (32) zum Heck des Fahrzeugs hin ausgerichtet ist, so dass das U eine Innenwand (320), die auf der Seite der Mittelebene (YO) angeordnet ist, und eine Außenwand (321) aufweist, die gegenüber der Mittelebene (YO) zur Seite des Fahrzeugs hin angeordnet ist, und dass die Vorderwand (311) der ersten Konkavität (31) in Kontinuität mit der Außenwand (321) der zweiten Konkavität (32) angeordnet ist und dass die Rückwand (310) der ersten Konkavität (31) von der Innenwand (320) der zweiten Konkavität (32) getrennt ist, um einen freien Raum (33) freizugeben, der den Zugang zum inneren Teil des Profils ermöglicht, das durch den inneren Raum dieser beiden U-förmigen Profile gebildet wird.

2. Heckklappe (2) eines Fahrzeugs (1) nach Anspruch 1, bei der die Stirnfläche (3110) der Vorderwand (311) der ersten Konkavität (31) eine Auflagefläche bildet, die dazu bestimmt ist, mit einer an der Karosserie (10) des Fahrzeugs (1) angeordneten Dichtung (102) in Kontakt gebracht zu werden.

3. Heckklappe (2) eines Fahrzeugs (1) nach Anspruch 1 oder Anspruch 2, wobei die Heckscheibe (7) an die Außenfläche (3100) der Rückwand (310) der ersten Konkavität (31) geklebt ist.

4. Heckklappe (2) eines Fahrzeugs (1) nach einem der vorstehenden Ansprüche, in der ein Kabelbündel (4) durch den durch die erste Konkavität (31) gebildeten Innenraum verläuft.

5. Heckklappe (2) eines Fahrzeugs (1) nach einem der vorstehenden Ansprüche, wobei ein Betätigungselement (5), das zwischen dem Dachsegment (101) und der Heckklappe (2) angelenkt ist, im Innenraum der zweiten Konkavität (32) angeordnet ist, um das Öffnen oder Schließen der Heckklappe zu erleichtern.

6. Heckklappe (2) eines Fahrzeugs (1) nach einem der vorstehenden Ansprüche, wobei die Innenwand (320) der zweiten Konkavität (32) eine Länge hat, die kürzer als die Außenwand (321) der zweiten Konkavität (32) ist, um das Sichtfeld nach hinten zu vergrößern.

7. Heckklappe (2) eines Fahrzeugs (1) nach einem der vorstehenden Ansprüche, wobei die Innenwand (320) der zweiten Konkavität (32) eine Länge aufweist, die größer ist als die Außenwand (321) der zweiten Konkavität (32), und bei der sich die Verlängerung (3201) der Innenwand (320) der zweiten Konkavität (32) von der Mittelebene (YO) weg zur lateralen Seite des Fahrzeugs hin krümmt und mit der Längsrichtung XX' einen von Null verschiedenen Winkel (a) bildet, um die Sicht nach hinten zu vergrößern.

8. Heckklappe (2) eines Fahrzeugs (1) nach einem der vorstehenden Ansprüche, wobei ein Verstärkungsteil (9) an der Innen- oder Außenwand der zweiten Konkavität (32) angeordnet ist.

9. Heckklappe (2) eines Fahrzeugs (1) nach Anspruch 8, wobei sich das Verstärkungsteil (9) von der Außenwand (321) der zweiten Konkavität (32) bis zum Ende der Rückwand (310) der ersten Konkavität (31) erstreckt.

10. Heckklappe (2) eines Fahrzeugs (1) nach einem der vorstehenden Ansprüche, wobei die Rückwand (310) der ersten Konkavität (31) mit der Querrichtung YY' einen von Null verschiedenen Winkel bildet.

11. Heckklappe (2) eines Fahrzeugs (1) nach einem der vorstehenden Ansprüche, wobei ein entfernbares Verkleidungselement (6) zwischen dem Ende der Rückwand (310) der ersten Konkavität (31) und dem Ende der Innenwand (320) der zweiten Konkavität (32) angeordnet ist, um den freien Durchgang (33) des den Pfosten bildenden Profils zu verschließen.

12. Heckklappe (2) für ein Fahrzeug (1) nach einem der vorstehenden Ansprüche, wobei die Profile der Pfosten (3) einstückig mit dem oberen Teil (20) und dem unteren Teil (21) der Heckklappe (2) ausgebildet sind, wobei die Heckklappe durch Formen eines wärmehärtbaren oder thermoplastischen Materials hergestellt ist.

## Claims

1. Vehicle (1) tailgate (2) that is intended to be rotatably mounted, by means of one or more hinges (22), to a roof segment (101) that forms part of the body (10) of said vehicle (1), said tailgate (2) comprising at least one lateral post (3) to which a rear window (7) is attached, the post (3) forming a profile having an open cross section and comprising a first (31) and a second U-shaped cavity (32) that each comprise two lateral walls, **characterized in that** the first cavity (31) faces the median plane (Y0) of the vehicle, such that the U comprises a rear wall (310) that is arranged towards the rear of the vehicle and a front wall (311) that is arranged towards the front of the vehicle, and **in that** the second cavity (32) is oriented towards the rear of the vehicle, such that the U comprises an inside wall (320) that is arranged on the side of the median plane (Y0), and an outside wall (321) that is arranged opposite the median plane (Y0) towards the lateral edge of the vehicle, and **in that** the front wall (311) of the first cavity (31) is arranged so as to be continuous with the outside wall (321) of the second cavity (32), and **in that** the rear wall (310) of the first cavity (31) is separated from the inside wall (320) of the second cavity (32) so as to free up a free space (33) that allows for access to the inner portion of the profile formed by the inside space of said two U shapes.

2. Vehicle (1) tailgate (2) according to claim 1, wherein the front face (3110) of the front wall (311) of the first cavity (31) forms a bearing surface that is intended to be brought into contact with a seal (102) arranged on the body (10) of the vehicle (1).

3. Vehicle (1) tailgate (2) according to either claim 1 or claim 2, wherein the rear window (7) is adhesively bonded to the outside face (3100) of the rear wall (310) of the first cavity (31).

4. Vehicle (1) tailgate (2) according to any of the preceding claims, wherein a cable harness (4) runs inside the interior space defined by the first cavity (31).

5. Vehicle (1) tailgate (2) according to any of the preceding claims, wherein an actuator (5), which is hinged between the roof segment (101) and the tailgate (2), is arranged in the interior space of the second cavity (32) in order to facilitate the opening or closing of the tailgate.

6. Vehicle (1) tailgate (2) according to any of the preceding claims, wherein the length of the inside wall (320) of the second cavity (32) is shorter than that of the outside wall (321) of said second cavity (32), so as to increase the rear field of view.

7. Vehicle (1) tailgate (2) according to any of the preceding claims, wherein the length of the inside wall (320) of the second cavity (32) is greater than that of the outside wall (321) of said second cavity (32), and wherein the extension (3201) of the inside wall (320) of the second cavity (32) curves away from the median plane (Y0) towards the lateral edge of the vehicle, forming a non-zero angle (a) with the longitudinal direction XX', so as to increase the rear view.

8. Vehicle (1) tailgate (2) according to any of the preceding claims, wherein a reinforcement part (9) is arranged on the inner or outer wall of the second cavity (32).

9. Vehicle (1) tailgate (2) according to claim 8, wherein the reinforcement part (9) extends from the outside wall (321) of the second cavity (32) as far as the end of the rear wall (310) of the first cavity (31).

10. Vehicle (1) tailgate (2) according to any of the preceding claims, wherein the rear wall (310) of the first cavity (31) forms a non-zero angle with the transverse direction YY'.

11. Vehicle (1) tailgate (2) according to any of the preceding claims, wherein a removable trim element (6) is arranged between the end of the rear wall (310) of the first cavity (31) and the end of the inside wall (320) of the second cavity (32), in order to block the free passage (33) of the profile that forms the post.

12. Vehicle (1) tailgate (2) according to any of the preceding claims, wherein the profiles of the posts (3) are formed integrally with the upper portion (20) and the lower portion (21) of the tailgate (2), the tailgate being produced by means of molding, from a thermosetting or thermoplastic material.
